# EUROPEAN PATENT SPECIFICATION

(11) **EP 2 173 666 B1**
(45) Date of publication and mention of the grant of the patent: **15.08.2012**
(21) Application number: 07801494.1
(22) Date of filing: 31.07.2007
(51) Int. Cl.: C02F 1/00

(54) **A PERCOLATION FILTER SYSTEM WITH A REPLACEABLE CARTRIDGE, A METHOD FOR DETERMINING THE DEPLETION OF A REPLACEABLE CARTRIDGE IN A FILTER SYSTEM AND A KIT INTEGRATING THIS METHOD**
PERKOLATIONSFILTERSYSTEM MIT AUSTAUSCHBARER KARTUSCHE, VERFAHREN ZUR BESTIMMUNG DER ERSCHÖPFUNG EINER AUSTAUSCHBAREN KARTUSCHE IN EINEM FILTERSYSTEM UND KIT MIT DIESEM VERFAHREN
SYSTÈME DE FILTRE PAR PERCOLATION À CARTOUCHE REMPLAÇABLE, PROCÉDÉ DE DÉTERMINATION D'USURE DE CETTE CARTOUCHE DANS UN SYSTÈME DE FILTRE, ET KIT INTÉGRANT CE PROCÉDÉ

(43) Date of publication of application: 14.04.2010
(73) Proprietor: Laica S.p.A., 36020 Barbarano Vicentino (VI) (IT)
(72) Inventor: ALEXANDROU, Olga, 2415 Engomi (CY)
(74) Representative: Cantaluppi, Stefano
(86) International application number: PCT/EP2007/006833
(87) International publication number: WO 2009/015680

(56) References cited:
- EP-A- 1 484 097
- WO-A-03/070351
- DE-A1-102005 038 556

## Description

The present invention relates to a percolation filter system with a replaceable cartridge, a method for determining the depletion of a replaceable cartridge in a filter system and a kit integrating this system and method.

When using jugs, kettles, teapots and like devices provided with a water filtering system of the so-called percolation type, with a replaceable cartridge, it is necessary to monitor and determine the service life of the filter cartridge and the parts subject to periodic maintenance.

Relatively sophisticated devices have been developed for this purpose and are adapted to count the cycles of use of the cartridge, the litres of water filtered and/or the time that has elapsed since its first use, in order to determine, as a function of these parameters, the degree of depletion and/or the residual service life of the cartridge. Examples of this prior art are known from DE10 2005 038556 A1 and WO 03/070351.

It is also known, for instance from EP-1 484 097, that the quality of the water being treated may also have a substantial impact on the service life of the cartridge which may vary depending on the quality and the concentration of the pollutants which it is wished to remove by filtration.

These systems are relatively costly and complex, however, and their operation entails high electricity consumption.

The problem underlying the present invention is that of providing a percolation filter system structurally and functionally designed to overcome the drawbacks described with respect to the prior art.

This problem is addressed and resolved by the invention by means of a filter system according to the accompanying claims.

The characteristic features and advantages of the invention are set out in further detail in the following detailed description of a preferred, but not exclusive, embodiment thereof, shown by way of non-limiting example in the accompanying drawings, in which:
Fig. 1 is a diagrammatic view of a filter jug system of the invention;
Fig. 2 is a diagrammatic top view of a lid portion of the jug of Fig. 1;

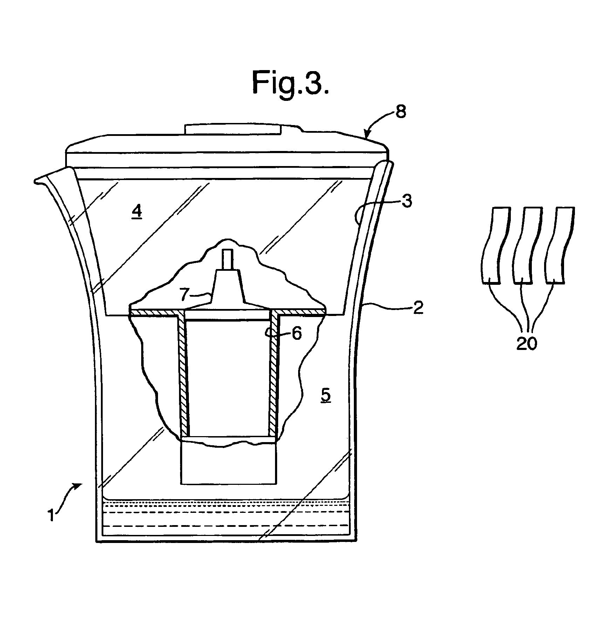

Fig. 3 is a diagrammatic view of a kit of the invention.

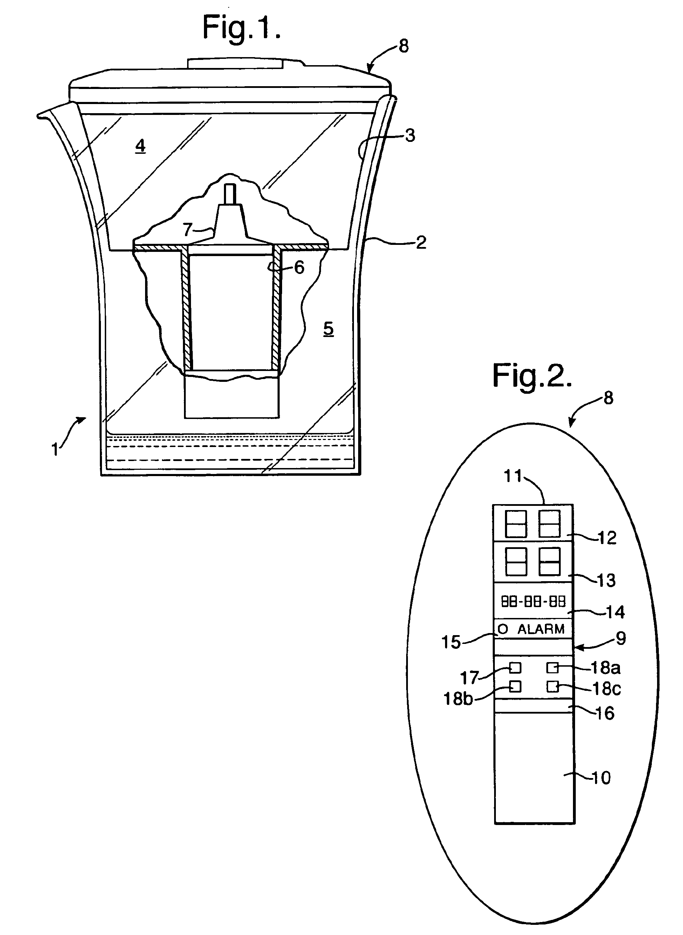

In Fig. 1, a filter jug according to the present invention is shown overall by 1. The jug 1 comprises, in a manner known per se, a container 2 within which a funnel-shaped hopper 3 is disposed, a tank 4 for collecting the water to be filtered being formed in the top portion of the hopper. A tank 5 adapted to collect the filtered water is in turn formed in the portion of the container 2 below the hopper 3. The two tanks 4, 5 communicate via a duct 6 in which a filter cartridge 7 of replaceable type is housed. The upper tank 4 is detachably closed by a lid 8 provided with means for determining and/or displaying a parameter representative of the residual service life and/or level of depletion of the cartridge 7 so that the user can be informed of this parameter with a view to replacing the spent cartridge. By way of example, these means 9 comprise a meter device 10 associated with a display 11 adapted to show, for instance, the number of filter cycles completed in a first window 12, the number of cycles left before the cartridge needs to be replaced in a second window 13, the date of first use of the inserted cartridge in a third window 14 and an alarm signal in a fourth window 15. The means 9 further comprise an operating circuit 16 in which the display management program is preloaded together with conventional metering devices. The operating circuit is connected to a system reset/start key 17 and a series of two or more keys 18a, b, c (three keys in the embodiment shown) of a control panel enabling manual selection of a desired correction of the metering of the depletion of the cartridge as a function of a physical-chemical parameter of the water being filtered.

This parameter is typically represented by the hardness of the water to be filtered as the actual life of the cartridge exchange resins depends in a non-negligible manner on this hardness as does the residual service life of the cartridge.

It has been observed that this parameter does not vary significantly over time if the jug is filled with water from the same water source, at least over the normal time span during which the service life of a filter cartridge is exhausted.

By way of example, each key may represent a class of hardness, for instance, high, medium or low hardness.

In the case of high hardness, for instance of the order of 40 degrees French, the cartridge should be considered to be spent 30 days after its first use and in any case after 200 filter cycles (equivalent to some 200 litres of filtered water).

In the case of medium hardness, for instance of the order of 20 degrees French, the cartridge should be considered to be spent 45 days after its first use and in any case after 250 filter cycles (equivalent to some 250 litres of filtered water).

In the case of low hardness, for instance of the order of 10 degrees French, the cartridge should be considered to be spent 60 days after its first use and in any case after 300 filter cycles (equivalent to some 300 litres of filtered water).

The software contained in the operating circuit 16 therefore offers three different metering options associated respectively with the three keys 18a, b, c in order to correct the determination and/or display of the parameter representative of the residual service life and/or level of depletion of the cartridge as a function of the water hardness setting set manually by the user.

The electronic control system may also be replaced by a mechanical corrector, adapted for instance to act on the transmission ratio between the metering mechanism and a mechanical indicator disc actuated stepwise in rotation after each cartridge filter cycle.

In order to determine the degree of hardness, reference may be made to the data supplied by the mains water provider in relation to the quality of the mains water supplied, or use may be made of appropriate known instruments used by hydraulic engineers and persons skilled in the art.

Alternatively, a kit may be supplied, with the jug and filter cartridges, of known cards 20 adapted to determine hardness, for instance using colorimetric evaluations. Cards of this type are commercially available, for instance from firms selling aquarium products.

As an alternative and/or in addition to hardness, other parameters representative of the physical-chemical state of the water to be treated may be detected and used for the desired correction, such as the concentrations of chlorine, nitrates and heavy metals, which may be detected by appropriate known reagents and detectors, or by the data supplied by the mains water provider and/or analysis laboratories and plant installers.

The invention thus resolves the above-mentioned problem with the obvious advantage of greater simplicity of use without a substantial reduction of the best possible use of the filter cartridges used. It may also be embodied in a simple manner using either electronic systems or mechanical or electro-mechanical systems.

## Claims

1. A percolation filter system with a replaceable cartridge comprising determination means (9) for determining and/or displaying (11) a parameter representative of the residual service life and/or level of depletion of the cartridge in order to inform the user of this parameter with a view to the replacement of the spent cartridge, the determination means (9) comprising means (10, 16) for correcting the determination and/or display of this parameter as a function of a physical-chemical parameter of the water to be filtered,
**characterised in that**
said means (10, 16) for correcting include means (18a, b and c), for manually setting the desired correction which may be set at will by the user.

2. A filter system according to claim 1, wherein the setting means are adapted to enable at least two alternative settings of this correction.

3. A filter system according to claim 2, wherein the setting means comprise a control panel connected to an operating circuit of the determination and/or display means in order to actuate these correction means as a function of the key of the control panel selected.

4. A filter system according to one or more of claims 1 to 3, wherein the correction means are of mechanical or electro-mechanical type.

5. A filter system according to one or more of the preceding claims, wherein the means for setting the desired correction are correlated with the hardness of the water to be filtered.

6. A filter system according to one or more of the preceding claims, wherein the means for setting the desired correction are correlated with one or a plurality of parameters selected from the concentrations of chlorine, nitrates and heavy metals.

7. A method for determining the residual service life and/or level of depletion of a cartridge within a percolation filter system according to claim 1 in order to inform the user of a parameter representative of this level of depletion with a view to the replacement of the spent cartridge, comprising a stage of correction of the determination and/or display of this parameter
**characterised by**
manually setting the desired correction by the user.

8. A kit including a filter system according to one or more of the preceding claims 1 to 6 including an at least one separate means for determining the hardness of the water to be filtered.

9. A kit according to claim 8, wherein the means for determining the hardness of the water to be filtered comprise at least one card for determining hardness, for instance with colorimetric evaluation.

## Patentansprüche

1. Perkolationsfiltersystem mit einer austauschbaren Kartusche mit einer Bestimmungseinrichtung (9) zum Bestimmen und/oder Anzeigen (11) eines Parameters, der die verbleibende Lebensdauer und/oder Grad der Erschöpfung der Kartusche darstellt, um den Anwender über diesen Parameter in Hinblick auf den Austausch der verbrauchten Kartusche zu informieren, wobei die Bestimmungseinrichtung (9) Einrichtungen (10, 16) zum Korrigieren der Bestimmung und/oder Anzeigen dieses Parameters als Funktion eines physikalischchemischen Parameters des zu filternden Wassers aufweist,
- **dadurch gekennzeichnet, dass**
- die Einrichtungen (10, 16) zum Korrigieren Einrichtungen (18a, b und c) zum manuellen Einstellen der gewünschten Korrektur umfassen, die nach Belieben durch den Anwender eingestellt werden können.

2. Filtersystem gemäß Anspruch 1, wobei die Einstelleinrichtungen vorgesehen sind, um zumindest zwei alternative Einstellungen dieser Korrektur zu ermöglichen.

3. Filtersystem gemäß Anspruch 2, wobei die Einstelleinrichtungen ein Bedienfeld aufweisen, das mit einer Betriebsschaltung der Bestimmung und/oder Anzeigeeinrichtung verbunden ist, um diese Korrektureinrichtungen als Funktion der Taste des ausgewählten Bedienfeldes zu betätigen.

4. Filtersystem gemäß einem oder mehreren der Ansprüche 1 bis 3, wobei die Korrektureinrichtungen vom mechanischen oder elektromechanischen Typ sind.

5. Filtersystem gemäß einem oder mehreren der vorhergehenden Ansprüche, wobei die Einrichtung zum Einstellen der gewünschten Korrektur mit der Härte des zu filternden Wassers korreliert.

6. Filtersystem gemäß einem oder mehreren der vorhergehenden Ansprüche, wobei die Einrichtungen zum Einstellen der gewünschten Korrektur mit einem oder einer Mehrzahl der Parameter korrelieren, die aus den Konzentrationen des Chlors, der Nitrate und der Schwermetalle ausgewählt werden.

7. Verfahren zum Bestimmen der verbleibenden Lebensdauer und/oder Grad der Erschöpfung einer Kartusche innerhalb eines Perkolationsfiltersystems gemäß Anspruch 1, um den Anwender über einen Parameter, der diesen Grad der Erschöpfung im Hinblick auf den Austausch der verbrauchten Kartusche darstellt, zu informieren, wobei eine Stufe der Korrektur der Bestimmung und/oder das Anzeigen dieses Parameters ausgewiesen wird,
- **gekennzeichnet durch**
- manuelles Einstellen der gewünschten Korrektur **durch** den Anwender.

8. Bausatz mit einem Filtersystem gemäß einem oder mehreren der vorhergehenden Ansprüche 1 bis 6, der zumindest eine getrennte Einrichtung zum Bestimmen der Härte des zu filternden Wassers umfasst.

9. Bausatz gemäß Anspruch 8, wobei die Einrichtung zum Bestimmen der Härte des zu filternden Wassers zumindest eine Karte zum Bestimmen der Härte, z. B. die farbmetrische Auswertung, aufweist.

## Revendications

1. Système de filtre à percolation avec une cartouche remplaçable comprenant des moyens de détermination (9) pour déterminer et/ou afficher (11) un paramètre représentatif de la durée de service résiduelle et/ou du niveau d'épuisement de la cartouche afin d'informer l'utilisateur de ce paramètre en vue du remplacement de la cartouche consommée, les moyens de détermination (9) comprenant des moyens (10, 16) pour corriger la détermination et/ou afficher ce paramètre comme une fonction d'un paramètre physico-chimique de l'eau à filtrer, **caractérisé en ce que**
lesdits moyens (10, 16) pour corriger incluent des moyens (18a, b et c), pour fixer manuellement la correction désirée qui peut être fixée à volonté par l'utilisateur.

2. Système de filtre selon la revendication 1, dans lequel les moyens de fixation sont adaptés à permettre au moins deux fixations alternatives de ces corrections.

3. Système de filtre selon la revendication 2, dans lequel les moyens de fixation comprennent un panneau de commande connecté à un circuit fonctionnel des moyens de détermination et/ou d'affichage afin d'actionner ces moyens de correction en fonction de la touche choisie du panneau de commande.

4. Système de filtre selon l'une ou plusieurs des revendications 1 à 3, dans lequel les moyens de correction sont du type mécanique ou électromécanique.

5. Système de filtre selon l'une ou plusieurs des revendications précédentes, dans lequel les moyens pour fixer la correction désirée sont en corrélation avec la dureté de l'eau à filtrer.

6. Système de filtre selon l'une ou plusieurs des revendications précédentes, dans lequel les moyens pour fixer la correction désirée sont en corrélation avec un paramètre ou une pluralité de paramètres choisis parmi les concentrations de chlore, de nitrates, et de métaux lourds.

7. Procédé pour déterminer la durée de service résiduelle et/ou le niveau d'épuisement d'une cartouche dans un système de filtre à percolation selon la revendication 1, afin d'informer l'utilisateur d'un paramètre représentatif de ce niveau d'épuisement en vue du remplacement de la cartouche consommée, comprenant un étage de correction de la détermination et/ou d'affichage de ce paramètre, **caractérisé par**
la fixation manuelle de la correction désirée par l'utilisateur.

8. Kit incluant un système de filtre selon l'une ou plusieurs des revendications précédentes 1 à 6, incluant au moins un moyen séparé pour déterminer la dureté de l'eau à filtrer.

9. Kit selon la revendication 8, dans lequel les moyens pour déterminer la dureté de l'eau à filtrer comprennent au moins une carte pour déterminer la dureté, par exemple avec une évaluation colorimétrique.
